# EUROPEAN PATENT APPLICATION

(11) **EP 4 336 594 A1**
(43) Date of publication of application: **13.03.2024**
(21) Application number: 22927601.9
(22) Date of filing: 14.07.2022
(51) Int. Cl.: H01M 4/583

(54) **POSITIVE ELECTRODE SLURRY AND PREPARATION METHOD THEREOF, POSITIVE POLE PIECE, SECONDARY BATTERY, BATTERY MODULE, BATTERY PACK AND ELECTRICAL APPARATUS**

(71) Applicant: Contemporary Amperex Technology Co., Limited, Ningde City, Fujian 352100 (CN)
(72) Inventor: CHEN, Junguang, Ningde, Fujian 352100 (CN); CHENG, Cong, Ningde, Fujian 352100 (CN); PEI, Haile, Ningde, Fujian 352100 (CN); YANG, Bingzi, Ningde, Fujian 352100 (CN); WANG, Xinghui, Ningde, Fujian 352100 (CN); ZHANG, Shengwu, Ningde, Fujian 352100 (CN)
(74) Representative: Kraus & Lederer PartGmbB
(86) International application number: PCT/CN2022/105760
(87) International publication number: WO 2024/011511

(57) **Abstract**

This application provides a positive electrode slurry including a solid inclusion and water, where the solid inclusion includes a positive electrode active material capable of intercalating and deintercalating lithium ions and lithium-containing graphene.

## Description

### TECHNICAL FIELD

This application relates to the field of secondary batteries, specifically to a positive electrode slurry and a preparation method therefor, a positive electrode plate, a secondary battery, a battery module, a battery pack, and an electric apparatus.

### BACKGROUND

Secondary batteries such as lithium-ion batteries have been widely used in consumer electronics, electric vehicles, and other fields due to their advantages such as high energy density, good cycling performance, and high average output voltage. Due to proneness to deterioration of positive electrode active materials such as lithium iron phosphate when coming in contact with water, positive electrode plates are usually prepared by using an oil-based positive electrode slurry of N-methylpyrrolidone (NMP)-polyvinylidene fluoride (PVDF) system in the conventional lithium-ion battery preparation process. However, the use of the NMP solvent poses challenges such as difficult reclamation, high costs, and environmental pollution.

### SUMMARY

Based on the above problems, this application provides a positive electrode slurry and a preparation method therefor, a positive electrode plate, a secondary battery, a battery module, a battery pack, and an electric apparatus, which can effectively avoid deterioration of positive electrode active materials, implementing good processability and low costs.

One aspect of this application provides a positive electrode slurry including a solid inclusion and water.

The solid inclusion includes a positive electrode active material capable of intercalating and deintercalating lithium ions and lithium-containing graphene.

In the positive electrode slurry of this application, due to the π-π stacking effects of the lithium-containing graphene, the lithium-containing graphene is able to cover the positive electrode active material in the positive electrode slurry, avoiding performance deterioration for the positive electrode active material coming in contact with water. In addition, the solid inclusion features good dispersibility in solvent water, good processability, low costs, and environmental friendliness.

In some embodiments, the lithium-containing graphene at least partially covers a surface of the positive electrode active material. The lithium-containing graphene at least partially covering the surface of the positive electrode active material can form a hydrophilic layer on the surface of the positive electrode active material, improving the dispersibility of the positive electrode active material while avoiding contact between the positive electrode active material and water. In addition, lithium ions in the lithium-containing graphene can further improve lithium ion transportation on the positive electrode plate to implement better kinetic performance of the secondary battery.

In some embodiments, the lithium-containing graphene includes lithium-containing sulfonic acid-based graphene. A sulfonic acid group in the lithium-containing sulfonic acid-based graphene can further improve the dispersibility of the positive electrode active material in the positive electrode slurry through electrostatic repulsion, to implement better processability for the positive electrode slurry.

In some embodiments, the molar ratio of element Li to element S in the lithium-containing sulfonic acid-based graphene is 1:(1-10); optionally, the molar ratio of element Li to element S in the lithium-containing sulfonic acid-based graphene is 1:(1-5). With the molar ratio of element Li to element S in the lithium-containing sulfonic acid-based graphene being within the foregoing range, the secondary batteries prepared by using the positive electrode slurry have better kinetic performance.

In some embodiments, the molar ratio of element C to element S in the lithium-containing sulfonic acid-based graphene is (3-12): 1.

In some embodiments, the mass percentage of the lithium-containing graphene in the solid inclusion is 0.01%-2%; optionally, the mass percentage of the lithium-containing graphene in the solid inclusion is 0.2%-1.5%. The mass percentage of lithium-containing graphene being within the foregoing range can effectively improve the dispersibility of the positive electrode active material in the aqueous positive electrode slurry and avoid deterioration of the positive electrode active material due to water absorption.

In some embodiments, the positive electrode active material includes at least one of LiFeₘMn₁₋ₘPO₄ and Li(NiₓCo_{y}Mn_{z}AlₐCu_{b}Zn_{c}Ti_{d})O₂, where 0≤m≤1, x+y+z+a+b+c+d=1, 0.5≤x<1, 0.05≤y<1, 0≤z<0.5, 0≤a≤0.1, 0≤b≤0.1, 0≤c≤0.1, and 0≤d≤0.1.

Optionally, the positive electrode active material is LiFePO₄.

In some embodiments, the solid inclusion further includes a dispersant; optionally, the dispersant includes at least one of a cationic dispersant and an amphoteric dispersant; and optionally, the dispersant includes at least one of polyethyleneimine and polyethylene glycol octylphenyl ether. Using the dispersant and the lithium-containing graphene together can further improve the dispersibility of the positive electrode slurry.

In some embodiments, the mass percentage of the dispersant in the solid inclusion is 0.01%-2%; optionally, the mass percentage of the dispersant in the solid inclusion is from 0.1%-0.5%. With the mass percentage of the dispersant being within the foregoing range, the positive electrode slurry has better dispersibility and better processing performance.

In some embodiments, the solid inclusion further includes an aqueous binder. Optionally, the aqueous binder includes at least one of methyl cellulose and its salt, xanthan gum and its salt, chitosan and its salt, alginate and its salt, polyacrylamide, and acrylonitrile-acrylic acid copolymer and its derivatives. The aqueous binder can be dissolved in the solvent water, and therefore the positive electrode slurry has relatively appropriate viscosity and adhesion.

In some embodiments, the aqueous binder is an acrylonitrile-acrylic acid copolymer; and optionally, the acrylonitrile-acrylic acid copolymer has a number average molecular weight of 300,000 to 2,000,000.

In some embodiments, the mass percentage of the aqueous binder in the solid inclusion is 0.1%-5%; and optionally, the mass percentage of the aqueous binder in the solid inclusion is 2%-4%. With the mass percentage of the aqueous binder being within the foregoing range, the positive electrode slurry has relatively appropriate viscosity, which is conducive to preparation of the positive electrode plate.

In some embodiments, the solid inclusion further includes a conductive agent. Optionally, the conductive agent includes at least one of conductive carbon black, superconducting carbon black, conductive graphite, acetylene black, Ketjen black, graphene, and carbon nanotubes.

In some embodiments, in the solid inclusion, the mass percentage of the conductive agent is 0. 1%-5%; and optionally, in the solid inclusion, the mass percentage of the conductive agent is 0.5%-3%.

In some embodiments, in the positive electrode slurry, the mass percentage of the solid inclusion is 40%-90%; and optionally, in the positive electrode slurry, the mass percentage of the solid inclusion is 50%-70%. The solid inclusion in the positive electrode slurry has relatively good dispersibility and the mass percentage of the solid inclusion can reach up to 90%, further reducing the amount of the solvent water.

In some embodiments, a viscosity of the positive electrode slurry is 100cp-10000cp; and optionally, the viscosity of the positive electrode slurry is 3000cp-7000cp. The viscosity of the positive electrode slurry being within the foregoing range is conducive to subsequent processing and preparation of the positive electrode plate.

According to a second aspect, this application further provides a method for preparing the foregoing positive electrode slurry, including the following step:
mixing a solid inclusion and water.

In some embodiments, the step of mixing the solid inclusion and the water includes:
preparing an agglomerated material by mixing a positive electrode active material, lithium-containing graphene, a dispersant, and a conductive agent; and
mixing the agglomerated material, an aqueous binder, and the water.

Preparing the agglomerated material by mixing the positive electrode active material, the lithium-containing graphene, and the dispersant first can further improve the dispersibility of the positive electrode active material in the positive electrode slurry to avoid agglomeration or gelation.

According to a third aspect, this application further provides a positive electrode plate including:
a positive electrode current collector; and
a positive electrode active material layer, where the positive electrode active material layer is provided on at least one surface of the positive electrode current collector, and the positive electrode active material layer is prepared by using the positive electrode slurry described above.

In some embodiments, the positive electrode active material layer includes lithium-containing sulfonic acid-based graphene. Optionally, the molar ratio of element Li to element S in the positive electrode active material layer is (10-5000): 1.

According to a fourth aspect, this application further provides a method for preparing positive electrode plate, including the following step:
preparing a positive electrode active material layer on at least one surface of a positive electrode current collector by using a positive electrode slurry, where the positive electrode slurry is the positive electrode slurry described above.

According to a fifth aspect, this application further provides a secondary battery including the positive electrode plate described above or a positive electrode plate prepared by using the foregoing method for preparing positive electrode plate.

According to a sixth aspect, this application further provides a battery module including the secondary battery described above.

According to a seventh aspect, this application further provides a battery pack including the battery module described above.

According to an eighth aspect, this application further provides an electric apparatus including at least one selected from the foregoing secondary battery, the foregoing battery module, and the foregoing battery pack.

Details of one or more embodiments of this application are presented in the accompanying drawings and descriptions below, and other features, objectives, and advantages of this application will become apparent from the specification, accompanying drawings, and claims.

### BRIEF DESCRIPTION OF DRAWINGS

FIG. 1 is a schematic diagram of a secondary battery according to an embodiment of this application.
FIG. 2 is an exploded view of the secondary battery according to the embodiment of this application in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

Reference signs are described as follows:
1. battery pack; 2. upper box body; 3. lower box body; 4. battery module; 5. secondary battery; 51. housing; 52. electrode assembly; 53. cover plate; and 6. electric apparatus.

In order to better describe and illustrate the embodiments and/or examples of the inventions disclosed herein, reference may be made to one or more accompanying drawings. The additional details or examples provided to describe the accompanying drawings should not be considered as limitations to the scope of the disclosed inventions, the currently described embodiments and/or examples, and the presently understood best implementations of these inventions.

### DESCRIPTION OF EMBODIMENTS

For ease of understanding this application, this application is described more fully below with reference to the related accompanying drawings. Preferred embodiments of this application are provided in the accompanying drawings. However, this application can be implemented in many different forms, which is not limited to the embodiments described herein. Rather, these embodiments are provided for the purpose of providing a more thorough and comprehensive understanding on disclosed content of this application.

Unless otherwise defined, all technical and scientific terms used herein shall have the same meanings as commonly understood by those skilled in the art to which this application belongs. The terms used herein in the specification of this application are for description of specific embodiments only without any intention to limit this application. The term "and/or" used herein includes any and all combinations of one or more related listed items.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum range values 1 and 2 are listed, and if maximum range values 3, 4, and 5 are listed, the following ranges are all presupposed: 1 to 3, 1 to 4, 1 to 5, 2 to 3, 2 to 4, and 2 to 5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

This application provides a positive electrode slurry and a preparation method therefor, and a positive electrode plate, a secondary battery, a battery module, a battery pack, and an electric apparatus prepared using such positive electrode slurry. Such secondary batteries are applicable to various electric apparatuses using batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

An embodiment of this application provides a positive electrode slurry including a solid inclusion and water. The solid inclusion includes a positive electrode active material capable of intercalating and deintercalating lithium ions and lithium-containing graphene.

In the positive electrode slurry of this application, due to the π-π stacking effects of the lithium-containing graphene, the lithium-containing graphene is able to cover the positive electrode active material in the positive electrode slurry, avoiding performance deterioration for the positive electrode active material coming in contact with water. In addition, the solid inclusion features good dispersibility in solvent water, good processability, low costs, and environmental friendliness.

In some embodiments, the lithium-containing graphene at least partially covers a surface of the positive electrode active material. The lithium-containing graphene at least partially covering the surface of the positive electrode active material can form a hydrophilic layer on the surface of the positive electrode active material, improving the dispersibility of the positive electrode active material while avoiding contact between the positive electrode active material and water. In addition, lithium ions in the lithium-containing graphene can further improve lithium ion transportation on the positive electrode plate to implement better kinetic performance of the secondary battery.

In some embodiments, the lithium-containing graphene includes lithium-containing sulfonic acid-based graphene. A sulfonic acid group in the lithium-containing sulfonic acid-based graphene can further improve the dispersibility of the positive electrode active material in the positive electrode slurry through electrostatic repulsion, to implement better processability for the positive electrode slurry.

In some embodiments, the molar ratio of element Li to element S in the lithium-containing sulfonic acid-based graphene is 1:(1-10). Optionally, the molar ratio of element Li to element S in the lithium-containing sulfonic acid-based graphene is 1:1, 1:2, 1:3, 1:4, 1:5, 1:6, 1:7, 1:8, 1:9, or 1:10. Further, the molar ratio of element Li to element S in the lithium-containing sulfonic acid-based graphene is 1:(1-5). With the molar ratio of element Li to element S in the lithium-containing sulfonic acid-based graphene being within the foregoing range, the secondary batteries prepared by using the positive electrode slurry have better kinetic performance.

In some embodiments, the molar ratio of element C to element S in the lithium-containing sulfonic acid-based graphene is (3-12):1. Optionally, the molar ratio of element C to element S in the lithium-containing sulfonic acid-based graphene is 3:1, 4:1, 5:1, 6:1, 7:1, 8:1, 9:1, 10:1, or 12:1. With the molar ratio of element C to element S in the lithium-containing sulfonic acid-based graphene being within the foregoing range, the solid inclusion in the positive electrode slurry has better dispersibility.

The elemental molar ratio of the lithium-containing sulfonic acid-based graphene can be obtained by using a method known in the art. In an example, the elemental molar ratio of the lithium-containing sulfonic acid-based graphene in this application is obtained through tests using a Horiba 7021-H X-ray spectrometer.

In some embodiments, a mass percentage of the lithium-containing graphene in the solid inclusion is 0.01%-2%. Optionally, in the solid inclusion, the mass percentage of the lithium-containing graphene may be in a range confined by any one of the following values: 0.01%, 0.05%, 0.1%, 0.5%, 0.8%, 1%, 1.2%, 1.5%, 1.8%, or 2%. Further, in the solid inclusion, the mass percentage of the lithium-containing graphene is 0.2%-1.5%. The mass percentage of lithium-containing graphene being within the foregoing range can effectively improve the dispersibility of the positive electrode active material in the aqueous positive electrode slurry and avoid deterioration of the positive electrode active material due to water absorption.

In some embodiments, the positive electrode active material includes at least one of LiFeₘMn₁₋ₘPO₄ and Li(NiₓCo_{y}Mn_{z}AlₐCu_{b}Zn_{c}Ti_{d})O₂, where 0≤m≤1, x+y+z+a+b+c+d=1, 0.5≤x<1, 0.05≤y<1, 0≤z<0.5, 0≤a≤0.1, 0≤b≤0.1, 0≤c≤0.1, and 0≤d≤0.1. Optionally, the positive electrode active material is LiFePO₄.

In some embodiments, the solid inclusion further includes a dispersant. Optionally, the dispersant includes at least one of a cationic dispersant and an amphoteric dispersant. Optionally, the dispersant includes at least one of polyethyleneimine and polyethylene glycol octylphenyl ether. Using the dispersant and the lithium-containing graphene together can further improve the dispersibility of the positive electrode slurry. In particular, the dispersant interacts with the sulfonic acid group of the lithium-containing sulfonic acid-based graphene to achieve better dispersibility improvement effects.

In some embodiments, a mass percentage of the dispersant in the solid inclusion is 0.01%-2%. Optionally, in the solid inclusion, the mass percentage of the dispersant may be in a range confined by any one of the following values: 0.01%, 0.05%, 0.1%, 0.2%, 0.4%, 0.5%, 0.6%, 0.8%, 1%, 1.2%, 1.5%, 1.6%, or 2%. Further, in the solid inclusion, the mass percentage of the dispersant is 0.1%-0.5%. With the mass percentage of the dispersant being within the foregoing range, the positive electrode slurry has better dispersibility and better processing performance.

In some embodiments, the solid inclusion further includes an aqueous binder. Optionally, the aqueous binder includes at least one of methyl cellulose and its salt, xanthan gum and its salt, chitosan and its salt, alginate and its salt, polyacrylamide, and acrylonitrile-acrylic acid copolymer and its derivatives. The aqueous binder can be dissolved in the solvent water, and therefore the positive electrode slurry has relatively appropriate viscosity and adhesion.

In some embodiments, the aqueous binder is an acrylonitrile-acrylic acid copolymer. Further, the acrylonitrile-acrylic acid copolymer has a number average molecular weight of 300,000 to 2,000,000.

In some embodiments, a mass percentage of the aqueous binder in the solid inclusion is 0.1%-5%. Optionally, in the solid inclusion, the mass percentage of the aqueous binder may be in a range confined by any one of the following values: 0.1%, 0.2%, 0.5%, 1%, 2%, 3%, 4%, or 5%. Further, in the solid inclusion, the mass percentage of the aqueous binder is 2%-4%. With the mass percentage of the aqueous binder being within the foregoing range, the positive electrode slurry has relatively appropriate viscosity, which is conducive to preparation of the positive electrode plate.

In some embodiments, the solid inclusion further includes a conductive agent. Optionally, the conductive agent includes at least one of conductive carbon black, superconducting carbon black, conductive graphite, acetylene black, Ketjen black, graphene, and carbon nanotubes.

In some embodiments, a mass percentage of the conductive agent in the solid inclusion is 0.1%-5%. Optionally, in the solid inclusion, the mass percentage of the conductive agent may be in a range confined by any one of the following values: 0.1%, 0.2%, 0.5%, 1%, 2%, 3%, 4%, or 5%. Further, in the solid inclusion, the mass percentage of the conductive agent is 0.5%-3%.

In some embodiments, in the positive electrode slurry, the mass percentage of the solid inclusion is 40%-90%. Optionally, in the positive electrode slurry, the mass percentage of the solid inclusion is 50%-70%. The solid inclusion in the positive electrode slurry has relatively good dispersibility and the mass percentage of the solid inclusion can reach up to 90%, further reducing the amount of the solvent water.

In some embodiments, a viscosity of the positive electrode slurry is 100cp-10000cp. Optionally, the viscosity of the positive electrode slurry is 3000cp-7000cp. The viscosity of the positive electrode slurry being within the foregoing range is conducive to subsequent processing and preparation of the positive electrode plate.

Another embodiment of this application further provides a method for preparing the foregoing positive electrode slurry, including the following step:
mixing a solid inclusion and water.

According to the foregoing method for preparing positive electrode slurry, the positive electrode slurry that is prepared by mixing the solid inclusion including the positive electrode active material and lithium-containing graphene with the water has better dispersibility and processability; and the positive electrode active material is resistant to water absorption and is less prone to deterioration.

In some embodiments, the step of mixing the solid inclusion and the water includes:
(1) preparing an agglomerated material by mixing a positive electrode active material, lithium-containing graphene, a dispersant, and a conductive agent.
(2) mixing the agglomerated material, an aqueous binder, and the water.

Preparing the agglomerated material by mixing the positive electrode active material, the lithium-containing graphene, the dispersant, and the conductive agent first can further improve the dispersibility of the positive electrode active material in the positive electrode slurry to avoid agglomeration or gelation.

In addition, the following describes a secondary battery, a battery module, a battery pack, and an electric apparatus in this application with appropriate reference to the accompanying drawings.

An embodiment of this application provides a secondary battery.

Normally, the secondary battery includes a positive electrode plate, a negative electrode plate, an electrolyte, and a separator. In a charge and discharge process of the battery, active ions are intercalated and deintercalated between the positive electrode plate and the negative electrode plate. The electrolyte conducts ions between the positive electrode plate and the negative electrode plate. The separator is disposed between the positive electrode plate and the negative electrode plate to mainly prevent a short circuit between positive and negative electrodes and to allow the ions to pass through.

### Positive electrode plate

The positive electrode plate includes a positive electrode current collector and a positive electrode active material layer disposed on at least one surface of the positive electrode current collector, where the positive electrode active material layer includes a positive electrode active material. The positive electrode active material layer of the positive electrode plate in this application is prepared using the foregoing positive electrode slurry according to the first aspect.

For example, the positive electrode current collector includes two opposite surfaces in its thickness direction, and the positive electrode active material layer is disposed on either or both of the two opposite surfaces of the positive electrode current collector.

In some embodiments, the positive electrode current collector may be a metal foil or a composite current collector. For example, an aluminum foil may be used as the metal foil. The composite current collector may include a polymeric material substrate and a metal layer formed on at least one surface of the polymeric material substrate. The composite current collector may be formed by forming a metallic material such as aluminum, aluminum alloy, nickel, nickel alloy, titanium, titanium alloy, silver, and silver alloy on a polymeric material substrate. The polymeric material substrate includes a substrate such as polypropylene (PP), polyethylene terephthalate (PET), polybutylene terephthalate (PBT), polystyrene (PS), or polyethylene (PE).

In some embodiments, the positive electrode active material may be a well-known positive electrode active material used for a battery in the art. Optionally, the positive electrode active material includes at least one of LiFeₘMn₁₋ₘPO₄ and Li(NiₓCo_{y}Mn_{z}AlₐCu_{b}Zn_{c}Ti_{d})O₂, where 0≤m≤1, x+y+z+a+b+c+d=1, 0.5≤x<1, 0.05≤y<1, 0≤z<0.5, 0≤a≤0.1, 0≤b≤0.1, 0≤c≤0.1, and 0≤d≤0.1. For example, the positive electrode active material may include at least one of the following materials: olivine-structured lithium-containing phosphate, lithium transition metal oxide, and respective modified compounds thereof. However, this application is not limited to such materials, and may alternatively use other conventional well-known materials that can be used as positive electrode active materials for batteries. One type of these positive electrode active materials may be used alone, or two or more types may be used in combination. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), and LiNi_{0.8}Co_{0.1}Mn_{0.1}O₂ (NCM811 for short)), lithium nickel cobalt aluminum oxide (for example, LiNi_{0.85}Co_{0.15}Al_{0.05}O₂), and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), composite materials of lithium manganese phosphate and carbon, lithium manganese iron phosphate, and composite materials of lithium manganese iron phosphate and carbon.

In some embodiments, the positive electrode active material layer further includes lithium-containing graphene. In some embodiments, the lithium-containing graphene at least partially covers a surface of the positive electrode active material. The lithium ions in the lithium-containing graphene can improve lithium ion transportation in the positive electrode active material layer, thereby improving the kinetic performance of the secondary battery.

Further, the lithium-containing graphene includes a lithium-containing sulfonic acid-based graphene. In some embodiments, the molar ratio of element Li to element S in the lithium-containing sulfonic acid-based graphene is 1:(1-10). Optionally, the molar ratio of element Li to element S in the lithium-containing sulfonic acid-based graphene is 1:1, 1:2, 1:3, 1:4, 1:5, 1:6, 1:7, 1:8, 1:9, or 1:10. Further, the molar ratio of element Li to element S in the lithium-containing sulfonic acid-based graphene is 1:(1-5). With the molar ratio of element Li to element S in the lithium-containing sulfonic acid-based graphene being within the foregoing range, the secondary batteries have better kinetic performance. In some embodiments, the molar ratio of element C to element S in the lithium-containing sulfonic acid-based graphene is (3-12):1. Optionally, the molar ratio of element C to element S in the lithium-containing sulfonic acid-based graphene is 3:1, 4:1, 5:1, 6:1, 7:1, 8:1, 9:1, 10:1, or 12:1. In some embodiments, the molar ratio of element Li to element S in the positive electrode active material layer is (10-5000):1.

Specifically, the molar ratio of element Li to element S or the molar ratio of element C to element S in the lithium-containing sulfonic acid-based graphene or positive electrode active material layer may be tested by using a method known in the art. In an example, the molar ratio may be obtained by performing SEM-EDS test and analysis using the ZEISS sigma 300 scanning electron microscope and Horiba 7021-H X-ray spectrometer.

In some embodiments, a mass percentage of the lithium-containing graphene in the positive electrode active material layer is 0.01%-2%. Optionally, in the positive electrode active material layer, the mass percentage of the lithium-containing graphene may be in a range confined by any one of the following values: 0.01%, 0.05%, 0.1%, 0.5%, 0.8%, 1%, 1.2%, 1.5%, 1.8%, or 2%. Further, in the positive electrode active material layer, the mass percentage of the lithium-containing graphene is 0.2%-1.5%.

In some embodiments, the positive electrode active material layer further optionally includes a dispersant. Optionally, the dispersant includes at least one of a cationic dispersant and an amphoteric dispersant. In an example, the dispersant includes at least one of polyethyleneimine and polyethylene glycol octylphenyl ether.

In some embodiments, a mass percentage of the dispersant in the positive electrode active material layer is 0.01%-2%. Optionally, in the positive electrode active material layer, the mass percentage of the dispersant may be in a range confined by any one of the following values: 0.01%, 0.05%, 0.1%, 0.2%, 0.4%, 0.5%, 0.6%, 0.8%, 1%, 1.2%, 1.5%, 1.6%, or 2%. Further, in the positive electrode active material layer, a mass percentage of the dispersant is 0.1%-0.5%.

In some embodiments, the positive electrode active material layer further optionally includes an aqueous binder. In an example, the aqueous binder may include at least one of methyl cellulose and its salt, xanthan gum and its salt, chitosan and its salt, alginate and its salt, polyacrylamide, and acrylonitrile-acrylic acid copolymer and its derivatives. In some embodiments, the aqueous binder is an acrylonitrile-acrylic acid copolymer. Further, the acrylonitrile-acrylic acid copolymer has a number average molecular weight of 300,000 to 2,000,000.

In some embodiments, a mass percentage of the aqueous binder in the positive electrode active material layer is 0.1%-5%. Optionally, in the positive electrode active material layer, the mass percentage of the aqueous binder may be in a range confined by any one of the following values: 0.1%, 0.2%, 0.5%, 1%, 2%, 3%, 4%, or 5%. Further, in the positive electrode active material layer, the mass percentage of the aqueous binder is 2%-4%.

In some embodiments, the positive electrode active material layer further optionally includes a conductive agent. In an example, the conductive agent may include at least one of conductive carbon black, superconducting carbon black, conductive graphite, acetylene black, Ketjen black, graphene, and carbon nanotubes. In some embodiments, a mass percentage of the conductive agent in the positive electrode active material layer is 0.1%-5%. Optionally, in the positive electrode active material layer, the mass percentage of the conductive agent may be in a range confined by any one of the following values: 0.1%, 0.2%, 0.5%, 1%, 2%, 3%, 4%, or 5%. Further, in the positive electrode active material layer, a mass percentage of the conductive agent is 0.5%-3%

In some embodiments, the positive electrode plate may be prepared by applying the positive electrode slurry on the positive electrode current collector, followed by processes such as drying and cold pressing, to obtain the positive electrode plate.

### Negative electrode plate

The negative electrode plate includes a negative electrode current collector and a negative electrode active material layer disposed on at least one surface of the negative electrode current collector, where the negative electrode active material layer includes a negative electrode active material.

For example, the negative electrode current collector includes two opposite surfaces in its thickness direction, and the negative electrode active material layer is disposed on either or both of the two opposite surfaces of the negative electrode current collector.

In some embodiments, the negative electrode current collector may be a metal foil or a composite current collector. For example, for the metal foil, a copper foil may be used. The composite current collector may include a polymeric material substrate and a metal layer formed on at least one surface of the polymeric material substrate. The composite current collector may be formed by forming a metallic material such as copper, copper alloy, nickel, nickel alloy, titanium, titanium alloy, silver, and silver alloy on a polymeric material substrate. The polymeric material substrate includes a substrate such as polypropylene (PP), polyethylene terephthalate (PET), polybutylene terephthalate (PBT), polystyrene (PS), or polyethylene (PE).

In some embodiments, the negative electrode active material may be a well-known negative electrode active material used for a battery in the art. For example, the negative electrode active material may include at least one of the following materials: artificial graphite, natural graphite, soft carbon, hard carbon, silicon-based material, tin-based material, and lithium titanate. The silicon-based material may be selected from at least one of elemental silicon, silicon-oxygen compound, silicon-carbon composite, silicon-nitrogen composite, or silicon alloy. The tin-based material may be selected from at least one of elemental tin, tinoxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode active material layer further optionally includes a binder. The binder may be selected from at least one of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode active material layer further optionally includes a conductive agent. The conductive agent may be selected from at least one of superconducting carbon, acetylene black, carbon black, Ketjen black, carbon dots, carbon nanotubes, graphene, and carbon nanofiber.

In some embodiments, the negative electrode active material layer further optionally includes other additives, such as thickener (for example, sodium carboxymethyl cellulose (CMC-Na)).

In some embodiments, the negative electrode plate may be prepared in the following manner: the components used for preparing negative electrode plate, for example, the negative electrode active material, the conductive agent, the binder, and any other components, are dissolved in a solvent (for example, deionized water) to form a negative electrode slurry. The negative electrode slurry is applied onto the negative electrode current collector, followed by processes such as drying and cold pressing, to obtain a negative electrode plate.

### Electrolyte

The electrolyte conducts ions between the positive electrode plate and the negative electrode plate. This application has no specific limitation on a type of the electrolyte, which can be selected as required. For example, the electrolyte may be in a liquid state, a gel state, or an all-solid state.

In some embodiments, the electrolyte is a liquid electrolyte. The liquid electrolyte includes an electrolytic salt and a solvent.

In some embodiments, the electrolytic salt may be selected from at least one of lithium hexafluorophosphate, lithium tetrafluoroborate, lithium perchlorate, lithium hexafluoroborate, lithium bisfluorosulfonyl imide, lithium bis-trifluoromethanesulfon imide, lithium trifluoromethanesulfonat, lithium difluorophosphate, lithium difluorooxalatoborate, lithium bisoxalatoborate, lithium difluorooxalate phosphate, and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butyl carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, cyclobutane sulfone, dimethyl sulfone, methyl ethyl sulfone, and diethyl sulfone.

In some embodiments, the liquid electrolyte further optionally includes an additive. For example, the additive may include a negative electrode film-forming additive or a positive electrode film-forming additive, or may include an additive capable of improving specific performance of battery, for example, an additive for improving over-charge performance of the battery, or an additive for improving high-temperature or low-temperature performance of the battery.

### Separator

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used to encapsulate the electrode assembly and electrolyte described above.

In some embodiments, the outer package of the secondary battery may be a hard shell, for example, a hard plastic shell, an aluminum shell, or a steel shell. The outer package of the secondary battery may alternatively be a soft pack, for example, a soft punch. Material of the soft pack may be plastic, which, for example, may be polypropylene, polybutylene terephthalate, and polybutylene succinate.

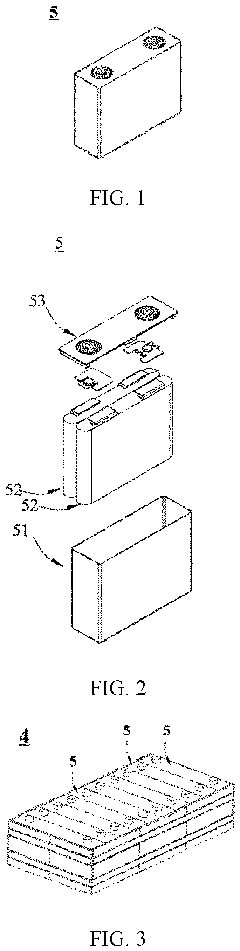

This application does not impose special limitations on a shape of the secondary battery, and the lithium-ion battery may be of a cylindrical shape, a square shape, or any other shapes. For example, FIG. 1 shows a secondary battery 5 of a rectangular structure as an example.

In some embodiments, referring to FIG. 2, the outer package may include a housing 51 and a cover plate 53. The housing 51 may include a base plate and a side plate connected onto the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is packaged in the accommodating cavity. The electrolyte infiltrates into the electrode assembly 52. The secondary battery 5 may include one or more electrode assemblies 52, and persons skilled in the art may make choices according to actual requirements.

In some embodiments, such secondary batteries may be combined into a battery module. The number of secondary batteries contained in the battery module may be one or more, the specific number of which may be selected by persons skilled in the art based on the application and capacity of the battery module.

FIG. 3 shows a battery module 4 as an example. Referring to FIG. 3, in the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with an accommodating space, and the plurality of secondary batteries 5 are accommodated in the accommodating space.

In some embodiments, the battery modules may be combined into a battery pack. The number of battery modules contained in the battery pack may be one or more, the specific number of which may be selected by persons skilled in the art based on the application and capacity of the battery pack.

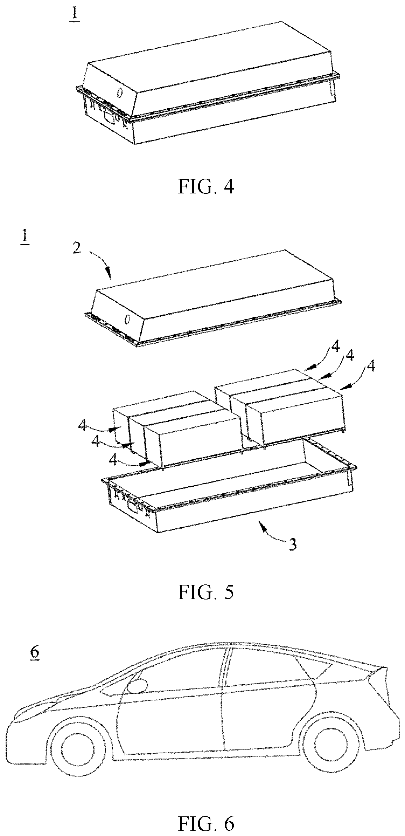

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source of the electric apparatus or as an energy storage unit of the electric apparatus. The electric apparatus may include mobile devices, electric vehicles, electrical trains, ships and satellites, energy storage systems, and the like, which is not limited thereto. The mobile device may be, for example, a mobile phone or a laptop computer; the electric vehicle may be, for example, a battery electric vehicle, a hybrid electric vehicle, a plug-in hybrid electric vehicle, an electric bicycle, an electric scooter, an electric golf cart, or an electric truck, which is not limited thereto.

The secondary battery, the battery module, or the battery pack may be selected for the electric apparatus based on requirements for using the electric apparatus.

FIG. 6 shows an electric apparatus 6 as an example. This electric apparatus 6 is a battery electric vehicle, a hybrid electric vehicle, a plug-in hybrid electric vehicle, or the like. To meet a requirement of the apparatus for high power and high energy density of the secondary battery, a battery pack or a battery module may be used.

In another example, the apparatus may be a mobile phone, a tablet computer, a notebook computer, or the like. The apparatus is usually required to be light and thin, and the secondary battery may be used as a power source.

### Examples

The following describes examples of this application. The examples described below are illustrative and only used to explain this application, and cannot be construed as limitations on this application. Examples whose technical solutions or conditions are not specified are made in accordance with technical solutions or conditions described in literature in the field, or made in accordance with product instructions. The reagents or instruments used are all conventional products that are commercially available if no manufacturer is indicated.

### Example 1:

Preparation of positive electrode plate: The positive electrode active material lithium iron phosphate (LFP), lithium-containing sulfonic acid-based graphene, conductive agent, and dispersant were uniformly mixed at a mass ratio of 96.5:0.2:1:0.3. Then, the mixture of the positive electrode active material lithium iron phosphate, lithium-containing sulfonic acid-based graphene, conductive agent, and dispersant was further mixed with an aqueous binder at a mass ratio of 98:2, where a molar ratio of Li/S in the lithium-containing sulfonic acid-based graphene was 1:1, and a molar ratio of C/S was 6:1. Polyethyleneimine was used as the dispersant, and LA-133 aqueous binder was used as the aqueous binder. The remaining portion was mixed with a solvent deionized water to obtain a positive electrode slurry with a solid content of 50%. Then, the positive electrode slurry was uniformly applied onto the positive electrode current collector aluminum foil, followed by drying, cold pressing, and cutting, to obtain a positive electrode plate.

Preparation of negative electrode plate: The active substance artificial graphite, the conductive agent carbon black, the binder styrene-butadiene rubber (SBR), and the thickener sodium carboxymethyl cellulose (CMC) were dispersed at a mass ratio of 96.2:0.8:0.8:1.2 in a solvent deionized water, the mixture was uniformly mixed to obtain a negative electrode slurry, and then the negative electrode slurry was applied uniformly onto a negative electrode current collector copper foil, followed by drying, cold pressing, and cutting, to obtain a negative electrode plate.

Preparation of electrolyte: In an argon atmosphere glove box (H₂O<0.1ppm, and O₂<0.1ppm), an organic solvent ethylene carbonate (EC)/methyl ethyl carbonate (EMC) was mixed uniformly at a volume ratio of 3/7, and 12.5% of LiPF₆ lithium salt was added and dissolved to the organic solvent. The resulting mixture was stirred uniformly to obtain an electrolyte.

Separator: polypropylene film was used as the separator.

Preparation of secondary battery: The positive electrode plate, the separator, and the negative electrode plate were stacked in order to make the separator sandwiched between the positive and negative electrode plates for isolation, and then were rolled into a bare cell. Tabs were welded to the bare cell, and the bare cell was placed in an aluminum shell and baked at 80°C to remove water, followed by injection of the electrolyte and sealing, to obtain an uncharged battery. The uncharged battery then underwent the processes of standing, hot and cold pressing, formation, shaping, capacity testing, and so on, to obtain a secondary battery product.

### Examples 2 to 6

Examples 2 to 6 differ from Example 1 in that the amount of lithium-containing sulfonic acid-based graphene in the positive electrode slurry is different.

### Examples 7 and 8

Examples 7 and 8 differ from Example 1 in that the molar ratio of C/S in lithium-containing sulfonic acid-based graphene in the positive electrode slurry is different.

### Examples 9 to 11

Examples 9 to 11 differ from Example 1 in that the molar ratio of Li/S in lithium-containing sulfonic acid-based graphene in the positive electrode slurry is different.

### Examples 12 to 16

Examples 12 to 16 differ from Example 1 in that the amount of dispersant in the positive electrode slurry is different.

### Examples 17 to 19

Examples 17 to 19 differ from Example 1 in that the amount of aqueous binder in the positive electrode slurry is different.

### Example 20:

Example 20 differs from Example 1 in that the dispersant in the positive electrode slurry is polyethylene glycol octylphenyl ether.

### Example 21:

Example 21 differs from Example 1 in that the aqueous binder in the positive electrode slurry is sodium alginate.

### Example 22:

Example 22 differs from Example 1 in that the positive electrode active material in the positive electrode slurry is LiNi_{0.8}Co_{0.1}Mn_{0.1}O₂ (NCM811).

### Comparative Example 1

Comparative Example 1 differs from Example 1 in that the positive electrode slurry contains no lithium-containing graphene or dispersant.

### Comparative Example 2

Comparative Example 2 differs from Example 1 in that the positive electrode slurry contains no lithium-containing graphene.

The lithium-containing sulfonic acid-based graphene used in the above examples can be all obtained commercially or prepared in a suitable manner known to those skilled in the art. In an example, the lithium-containing sulfonic acid-based graphene was prepared as follows: the sulfonate-containing graphene was uniformly dispersed in DMF, and then lithium hydroxide was added and stirred for 1-4h, followed by drying at 100°C-120°C to obtain the lithium-containing sulfonic acid-based graphene. The type of sulfonic acid-based graphene and the amounts of sulfonic acid-based graphene and lithium hydroxide were adjusted according to the elemental molar ratios in Table 1. The elemental composition of the lithium-containing sulfonic acid-based graphene prepared above could alternatively be obtained through tests using a Horiba 7021-H X-ray spectrometer, so as to obtain the molar ratio of C/S and the molar ratio of Li/S in the lithium-containing sulfonic acid-based graphene.

The compositions of the positive electrode slurries in Examples 1 to 22 and Comparative Examples 1 and 2 are recorded in Table 1.

### Testing:

### Particle size test for positive electrode slurry:

The prepared positive electrode slurry was left standing for 10 min, and an appropriate amount of positive electrode slurry was taken and added to 20 ml of deionized water (with a concentration ensuring 8%-12% opacity), followed by ultrasonic treatment for 5 min (53KHz/120W) until being completely dispersed, to obtain a to-be-tested sample. A Malvern 2000 (MasterSizer 2000) laser particle size meter was used to determine a Dᵥ50 particle size of the sample under test according to the standard procedure GB/T19077-2016/ISO 13320:2009.

### Initial gram capacity test for secondary battery:

Using Example 1 as an example, the secondary battery was charged at 25°C at a constant current rate of 1/3C to 3.65V (4.25V for NCM811), then charged at a constant voltage of 3.65V (4.25V for NCM811) to a current of 0.05C, left standing for 5 min, and then discharged at 1/3C to 2.5V (2.8V for NCM811). The resulting capacity was divided by the mass of positive electrode active material in the positive electrode and was recorded as an initial gram capacity Cw.

### Direct current impedance test:

Using Example 1 as an example, the secondary battery was charged to 3.65V (4.25V for NCM811) at a constant current rate of 1.5C, and then charged to 0.05C at a constant voltage. After left standing for 30min, the secondary battery was discharged at a current rate of 0.1C for 10s (a data point was taken every 0.1s and a corresponding voltage value U1 was recorded), and then discharged at a current rate of 1C for 360s (a data point was taken every 0.1s and a corresponding voltage value U2 was recorded). The charging and discharging steps were repeated five times. "1C" refers to a current at which a battery is fully discharged in one hour. DCR is calculated according to the following formula: R = (U2-U1)/(1C-0.1C). The DCR described in this application is a value in a 50% SOC (state of charge, state of charge) state.

### Cycling performance test at a high current rate:

Using Example 1 as an example, the secondary battery was charged at 25°C at a constant current rate of 25C to 3.65V (4.25V for NCM811), then charged at a constant voltage of 3.65V (4.25V for NCM811) to a current of 0.05C, left standing for 5 min, and then discharged at 25C to 2.5V (2.8V for NCM811). An initial direct-current resistance impedance R0 was recorded. The above steps were repeated for the same battery, and a direct-current resistance impedance Rn after the n-th cycle was also recorded. In this case, the DCR growth rate Pn of the battery after each cycle is Rn/R0*100%-1. During this test, the first cycle corresponds to n=1, the second cycle corresponds to n=2, ..., and the 100th cycle corresponds to n=100. The DCR growth rate data of the secondary battery in Table 2 is data obtained through measurement after 100 cycles under the above test conditions, that is, values for P100.

The electrochemical performance test data of the secondary batteries in Examples 1 to 22 and Comparative Examples 1 and 2 is recorded in Table 2.

**Table 1 Compositions of positive electrode slurries in Examples 1 to 22 and Comparative Examples 1 and 2**

| No. | Positi ve electr ode active materi al | Lithium-containing sulfonic acid-based graphene | | | Dispersant | | Aqueous binder | | Partic le size of positi ve electr ode slurry (µm) |
|---|---|---|---|---|---|---|---|---|---|
| | | Mol ar rati o of Li/ S | Mol ar rati o of C/S | Mass percent age (%) | Type | Mass percent age (%) | Type | Mass percent age (%) | |
| Example 1 | LFP | 1:1 | 6:1 | 0.2 | Polyethylene imine | 0.3 | LA-133 | 2 | 1.10 |
| Example 2 | LFP | 1:1 | 6:1 | 0.01 | Polyethylene imine | 0.3 | LA-133 | 2 | 1.33 |
| Example 3 | LFP | 1:1 | 6:1 | 0.05 | Polyethylene imine | 0.3 | LA-133 | 2 | 1.30 |
| Example 4 | LFP | 1:1 | 6:1 | 1 | Polyethylene imine | 0.3 | LA-133 | 2 | 1.08 |
| Example 5 | LFP | 1:1 | 6:1 | 1.5 | Polyethylene imine | 0.3 | LA-133 | 2 | 1.07 |
| Example 6 | LFP | 1:1 | 6:1 | 2 | Polyethylene imine | 0.3 | LA-133 | 2 | 1.07 |
| Example 7 | LFP | 1:1 | 3:1 | 0.2 | Polyethylene imine | 0.3 | LA-133 | 2 | 1.09 |
| Example 8 | LFP | 1:1 | 12: 1 | 0.2 | Polyethylene imine | 0.3 | LA-133 | 2 | 1.28 |
| Example 9 | LFP | 1:1 0 | 6:1 | 0.2 | Polyethylene imine | 0.3 | LA-133 | 2 | 1.10 |
| Example 10 | LFP | 1:3 | 6:1 | 0.2 | Polyethylene imine | 0.3 | LA-133 | 2 | 1.10 |
| Example 11 | LFP | 1:5 | 6:1 | 0.2 | Polyethylene imine | 0.3 | LA-133 | 2 | 1.10 |
| Example 12 | LFP | 1:1 | 6:1 | 0.2 | / | / | LA-133 | 2 | 1.29 |
| Example 13 | LFP | 1:1 | 6:1 | 0.2 | Polyethylene imine | 0.01 | LA-133 | 2 | 1.28 |
| Example 14 | LFP | 1:1 | 6:1 | 0.2 | Polyethylene imine | 0.1 | LA-133 | 2 | 1.22 |
| Example 15 | LFP | 1:1 | 6:1 | 0.2 | Polyethylene imine | 0.5 | LA-133 | 2 | 1.08 |
| Example 16 | LFP | 1:1 | 6:1 | 0.2 | Polyethylene imine | 2.0 | LA-133 | 2 | 1.07 |
| Example 17 | LFP | 1:1 | 6:1 | 0.2 | Polyethylene imine | 0.3 | LA-133 | 0.1 | 1.10 |
| Example 18 | LFP | 1:1 | 6:1 | 0.2 | Polyethylene imine | 0.3 | LA-133 | 4 | 1.10 |
| Example 19 | LFP | 1:1 | 6:1 | 0.2 | Polyethylene imine | 0.3 | LA-133 | 5 | 1.10 |
| Example 20 | LFP | 1:1 | 6:1 | 0.2 | Polyethylene glycol octylphenyl ether | 0.3 | LA-133 | 2 | 1.19 |
| Example 21 | LFP | 1:1 | 6:1 | 0.2 | Polyethylene imine | 0.3 | Sodi um algin ate | 2 | 1.10 |
| Example 22 | NCM 811 | 1:1 | 6:1 | 0.2 | Polyethylene imine | 0.3 | LA-133 | 2 | 4.70 |
| Compar ative Example 1 | LFP | / | / | / | / | / | LA-133 | 2 | 1.51 |
| Compar ative Example 2 | LFP | / | / | / | Polyethylene imine | 0.3 | LA-133 | 2 | 1.37 |

| | | | | | | | | | |
|---|---|---|---|---|---|---|---|---|---|
| Note: The mass percentages in Table 1 all indicate mass percentages of substances in the solid inclusions of the positive electrode slurries. | | | | | | | | | |

**Table 2 Electrochemical performance of secondary batteries in Examples 1 to 22 and Comparative Examples 1 and 2**

| No. | Initial gram capacity (mAh/g) | Direct-current resistance impedance DCR (Ω) | DCR growth rate after 100 cycles at 25C (%) |
|---|---|---|---|
| Example 1 | 160 | 1.41 | 12 |
| Example 2 | 157 | 1.49 | 19 |
| Example 3 | 158 | 1.57 | 23 |
| Example 4 | 160 | 1.39 | 11 |
| Example 5 | 160 | 1.38 | 11 |
| Example 6 | 160 | 1.37 | 11 |
| Example 7 | 160 | 1.41 | 12 |
| Example 8 | 160 | 1.49 | 12 |
| Example 9 | 160 | 1.50 | 13 |
| Example 10 | 160 | 1.51 | 15 |
| Example 11 | 160 | 1.59 | 17 |
| Example 12 | 160 | 1.53 | 14 |
| Example 13 | 160 | 1.75 | 18 |
| Example 14 | 160 | 1.55 | 16 |
| Example 15 | 160 | 1.41 | 12 |
| Example 16 | 160 | 1.47 | 12 |
| Example 17 | 160 | 1.67 | 22 |
| Example 18 | 160 | 1.51 | 16 |
| Example 19 | 160 | 1.54 | 18 |
| Example 20 | 160 | 1.56 | 16 |
| Example 21 | 160 | 1.41 | 12 |
| Example 22 | 174 | 1.37 | 11 |
| Comparative Example 1 | 156 | 1.75 | 29 |
| Comparative Example 2 | 156 | 1.58 | 27 |

It can be seen from related data of Table 1 and Table 2 that the positive electrode slurries of Comparative Examples 1 and 2 contain no lithium-containing graphene, particle sizes Dᵥ50 of the positive electrode slurries are 1.37µm-1.51µm, initial gram capacities of the secondary batteries in Comparative Examples 1 and 2 are 156mAh/g, DCRs are 1.58Ω-1.75Ω, and DCR growth rates after 100 cycles at 25C are 27%-29%.

As compared with Comparative Examples 1 and 2, lithium-containing graphene is added to the positive electrode slurries in Examples 1 to 21, the particle sizes Dᵥ50 of the positive electrode slurries are 1.07µm-1.33µm, and dispersibility of the positive electrode slurries are relatively good. The initial gram capacities of the secondary batteries in Examples 1 to 21 are 158mAh/g-160mAh/g, which are higher than those of the secondary batteries in Comparative Examples 1 and 2. This indicates that capacities of the secondary batteries in Examples 1 to 22 are not decreased during preparation because lithium iron phosphate is resistant to water absorption and is less prone to deterioration. In addition, the DCRs of the secondary batteries in Examples 1 to 21 are 1.38Q-1.67Q. After 100 cycles at 25°C, the DCR growth rates are 11%-23%. Lithium ions in the lithium-containing graphene can improve lithium ion transportation in the secondary batteries, thereby reducing DCRs. The lithium-containing graphene at least partially covers the surface of the positive electrode active material, so that the secondary battery exhibits good cycling performance and is less prone to deterioration during high-rate charging and discharging. Content of the binder in Example 21 is relatively low, and the adhesion force of the electrode plate is slightly lower than that of the positive electrode plates in Examples 1 to 20, resulting in higher DCRs and higher DCR growth rates during high-rate charging/discharging.

In the secondary battery in Example 22, the positive electrode active material is NCM811, the particle size Dᵥ50 of the positive electrode slurry is 4.70µm, the positive electrode slurry has relatively good dispersibility, the initial gram capacity of the secondary battery is 174mAh/g, the DCR is 1.37Q, and the DCR growth rate after 100 cycles at 25C is 11%, featuring relatively good kinetic performance and cycling performance.

Technical features in the foregoing embodiments may be combined in any way. For brevity of description, possible combinations of the technical features in the foregoing embodiments are not described all. However, as long as there is no contradiction among combinations of these technical features, all the combinations should be considered within a range recorded in this specification.

The foregoing embodiments represent only several implementations of this application with more specific and detailed descriptions, and are not to be construed as limitation on the patent scope of the invention. It should be noted that for persons of ordinary skill in the art, a number of variations and improvements can be made without departing from the conception of this application, and these fall within the protection scope of this application. Therefore, the protection scope of the patent of this application shall be subject to the attached claims.

## Claims

1. A positive electrode slurry, **characterized by** comprising a solid inclusion and water; wherein
the solid inclusion comprises a positive electrode active material capable of intercalating and deintercalating lithium ions and lithium-containing graphene.

2. The positive electrode slurry according to claim 1, **characterized in that** the lithium-containing graphene at least partially covers a surface of the positive electrode active material.

3. The positive electrode slurry according to claim 1 or 2, **characterized in that** the lithium-containing graphene comprises lithium-containing sulfonic acid-based graphene.

4. The positive electrode slurry according to claim 3, **characterized in that** a molar ratio of element Li to element S in the lithium-containing sulfonic acid-based graphene is 1:(1-10); and
optionally, the molar ratio of element Li to element S in the lithium-containing sulfonic acid-based graphene is 1:(1-5).

5. The positive electrode slurry according to claim 3 or 4, **characterized in that** the molar ratio of element C to element S in the lithium-containing sulfonic acid-based graphene is (3-12):1.

6. The positive electrode slurry according to any one of claims 1 to 5, **characterized in that** in the solid inclusion, a mass percentage of the lithium-containing graphene is 0.01%-2%; and
optionally, in the solid inclusion, the mass percentage of the lithium-containing graphene is 0.2%-1.5%.

7. The positive electrode slurry according to any one of claims 1 to 6, **characterized in that** the positive electrode active material comprises at least one of LiFeₘMn₁₋ₘPO₄ and Li(NiₓCo_{y}Mn_{z}AlₐCu_{b}Zn_{c}Ti_{d})O₂, wherein 0≤m≤1, x+y+z+a+b+c+d=1, 0.5≤x<1, 0.05≤y<1, 0≤z<0.5, 0≤a≤ 0.1, 0≤b≤0.1, 0≤c≤0.1, and 0≤d≤0.1; and
optionally, the positive electrode active material is LiFePO₄.

8. The positive electrode slurry according to any one of claims 1 to 7, **characterized in that** the solid inclusion further comprises a dispersant;
optionally, the dispersant comprises at least one of a cationic dispersant and an amphoteric dispersant; and
optionally, the dispersant comprises at least one of polyethyleneimine and polyethylene glycol octylphenyl ether.

9. The positive electrode slurry according to claim 8, **characterized in that** in the solid inclusion, a mass percentage of the dispersant is 0.01%-2%; and
optionally, in the solid inclusion, the mass percentage of the dispersant is 0. 1%-0.5%.

10. The positive electrode slurry according to any one of claims 1 to 9, **characterized in that** the solid inclusion further comprises an aqueous binder; and
optionally, the aqueous binder comprises at least one of methyl cellulose and its salt, xanthan gum and its salt, chitosan and its salt, alginate and its salt, polyacrylamide, and acrylonitrile-acrylic acid copolymer and its derivatives.

11. The positive electrode slurry according to claim 10, **characterized in that** the aqueous binder is an acrylonitrile-acrylic acid copolymer; and
optionally, the acrylonitrile-acrylic acid copolymer has a number average molecular weight of 300,000 to 2,000,000.

12. The positive electrode slurry according to claim 10 or 11, **characterized in that** in the solid inclusion, a mass percentage of the aqueous binder is 0.1%-5%; and
optionally, in the solid inclusion, the mass percentage of the aqueous binder is 2%-4%.

13. The positive electrode slurry according to any one of claims 1 to 12, **characterized in that** the solid inclusion further comprises a conductive agent; and
optionally, the conductive agent comprises at least one of conductive carbon black, superconducting carbon black, conductive graphite, acetylene black, Ketjen black, graphene, and carbon nanotubes.

14. The positive electrode slurry according to claim 13, **characterized in that** in the solid inclusion, a mass percentage of the conductive agent is 0.1%-5%; and
optionally, in the solid inclusion, the mass percentage of the conductive agent is 0.5%-3%.

15. The positive electrode slurry according to any one of claims 1 to 14, **characterized in that** in the positive electrode slurry, a mass percentage of the solid inclusion is 40%-90%; and optionally, in the positive electrode slurry, the mass percentage of the solid inclusion is 50%-70%.

16. The positive electrode slurry according to any one of claims 1 to 15, **characterized in that** a viscosity of the positive electrode slurry is 100cp-10000cp; and
optionally, the viscosity of the positive electrode slurry is 3000cp-7000cp.

17. A method for preparing the positive electrode slurry according to any one of claims 1 to 16, **characterized by** comprising the following step:
mixing a solid inclusion and water.

18. The method for preparing positive electrode slurry according to claim 17, **characterized in that** the step of mixing the solid inclusion and hydrophilic solvent comprises:
preparing an agglomerated material by mixing a positive electrode active material, lithium-containing graphene, a dispersant, and a conductive agent; and
mixing the agglomerated material, an aqueous binder, and the water.

19. A positive electrode plate, **characterized by** comprising:
a positive electrode current collector; and
a positive electrode active material layer, wherein the positive electrode active material layer is provided on at least one surface of the positive electrode current collector, and the positive electrode active material layer is prepared by using the positive electrode slurry according to any one of claims 1 to 16.

20. The positive electrode plate according to claim 19, **characterized in that** the positive electrode active material layer comprises lithium-containing sulfonic acid-based graphene; and
optionally, a molar ratio of element Li to element S in the positive electrode active material layer is (10-5000): 1.

21. A method for preparing positive electrode plate, **characterized by** comprising the following step:
preparing a positive electrode active material layer on at least one surface of a positive electrode current collector by using a positive electrode slurry, wherein the positive electrode slurry is the positive electrode slurry according to any one of claims 1 to 16.

22. A secondary battery, **characterized by** comprising the positive electrode plate according to claim 19 or 20 or a positive electrode plate prepared by using the method for preparing positive electrode plate according to claim 21.

23. A battery module, **characterized by** comprising the secondary battery according to claim 22.

24. A battery pack, **characterized by** comprising the battery module according to claim 23.

25. An electric apparatus, **characterized by** comprising at least one of the secondary battery according to claim 22, the battery module according to claim 23, and the battery pack according to claim 24.
